# EUROPÄISCHE PATENTANMELDUNG

(11) **EP 1 312 842 A2**
(43) Veröffentlichungstag der Anmeldung: **21.05.2003**
(21) Anmeldenummer: 02023264.1
(22) Anmeldetag: 17.10.2002
(51) Int. Cl.: F16K 7/07

(54) **Einrichtung zur Regelung der Abflussmenge aus einem Flüssigkeitsbehälter**

(30) Priorität: 16.11.2001 DE 20118757 U
(71) Anmelder: KSB Aktiengesellschaft, 67227 Frankenthal (DE)
(72) Erfinder: Schiele, Otto, 86415 Mering (DE)

(57) **Zusammenfassung**

Die Erfindung bezieht sich auf eine Einrichtung zur Regelung der einem Flüssigkeitsbehälter über einen Abfluß entströmenden Flüssigkeitsmenge, insbesondere zur Drosselung der Abflußmenge aus einem Abwasser-, Regenüberlauf- oder Regenrückhaltebecken, mit einer in einem Ablaufkanal angeordneten, im Querschnitt veränderbaren Drosselvorrichtung. Eine solche Einrichtung sollte dahingehend verbessert werden, daß mit ihrer Hilfe eine genaue, für Störungen unempfindliche Abflußmengendrosselung erreicht wird.

Dies wird erfindungsgemäß erreicht durch eine elastisch einstellbare, mit einem flexiblen Drosselglied ausgestattete Drosselvorrichtung (3); (Fig. 1).

## Beschreibung

Die Neuerung bezieht sich auf eine Einrichtung zur Regelung der einem Flüssigkeitsbehälter über einen Abfluß entströmenden Flüssigkeitsmenge, insbesondere zur Drosselung der Abflußmenge aus einem Abwasser-, Regenüberlauf- oder Regenrückhaltebecken, mit einer in einem Ablaufkanal angeordneten, im Querschnitt veränderbaren Drosselvorrichtung.

Die Notwendigkeit einer Abflußmengenregelung ergibt sich aus Umständen, die für die jeweilige Anlage, beispielsweise im Abwasser- oder Regenspeicherbereich, spezifisch sind. So ist bei einer Kläranlage die biologische Reinigungswirkung nur bei bestimmten Mengen an zufließendem Abwasser gewährleistet. Große Mengendifferenzen können zu erheblichen Problemen, im Extremfall sogar zum Ausfall der biologischen Reinigung führen. Daher muß, unabhängig vom Füllstand des Beckens, stets eine konstante Abwassermenge abgeführt werden.

Die bekannten, zur Abflußmengenregelung eingesetzten Drosseleinrichtungen, wie Waagedrossel, Wirbeldrossel, Hydroslide oder elektromotorisch betriebene geregelte Schieber arbeiten im unteren Mengenbereich von etwa 1 bis 30 I/s unzuverlässig, da bei ihnen eine Mengenreduktion durch eine erhebliche mechanische Querschnittsverengung des Abflußkanals bewirkt wird. Im übrigen kommt es wegen der im Abwasser enthaltenen Beimengungen häufig zu Verstopfungen oder zu einem Ausfall der Überwachungseinrichtungen, wie Endschalter, Drehmomentschalter usw. Dabei ist die Beseitigung einer Störquelle, meist ein Feststoffteil, sehr aufwendig und oft erst bei entleertem Becken möglich.

Der Erfindung liegt die Aufgabe zugrunde, eine Einrichtung zu schaffen, mit deren Hilfe eine genaue, für Störungen unempfindliche Abflußmengendrosselung erreicht wird.

Die gestellte Aufgabe wird neuerungsgemäß durch eine elastisch einstellbare, mit einem flexiblen Drosselglied ausgestattete Drosselvorrichtung gelöst. In zweckmäßiger Ausgestaltung der Neuerung wird die Drosselvorrichtung von einem Quetschventil, vorzugsweise einem pneumatisch betätigten Quetschventil gebildet.

Außerdem wird eine Ausgestaltung vorgeschlagen, die ein der Drosselvorrichtung zugeordnetes Durchflußmeßgerät zur Feststellung der über den Ablaufkanal fließenden Abflußmenge, beispielsweise einen magnetisch-induktiven Durchflußmesser, auch als "MID" bezeichnet, und eine das Signal des Durchflußmeßgerätes verarbeitende Regeleinrichtung zur Einstellung des Öffnungsgrades der Drosselvorrichtung umfaßt.

Der Grundgedanke der Neuerung liegt darin, daß eine Reduzierung des Vordrucks durch eine elastische Querschnittsverengung bewirkt wird, wobei diese elastische Verengung eine feinfühlige Anpassung an die jeweils gegebenen Regelerfordernisse erlaubt und durch sich festsetzende Teile in ihrer Funktion nicht beeinträchtigt wird. Selbst einem Störfall, der bei den oben geschilderten Vorrichtungen einen erheblichen Aufwand für die Beseitigung verursachte, vermag die neuerungsgemäße Drosselvorrichtung zu begegnen: bei Auftreten einer Verstopfung kann die Drosselvorrichtung auf den vollen Querschnitt geöffnet werden, um so den oder die Fremdkörper freizugeben. Dies geschieht vorzugsweise automatisch, wobei auch hier das der Drosselvorrichtung zugeordnete Durchflußmeßgerät und die dessen Signal verarbeitende Regeleinrichtung genutzt werden. Die neuerungsgemäße Einrichtung zur Regelung der Abflußmenge besitzt somit eine weitgehende Störungsunanfälligkeit und verursacht weinig Aufwand für Wartung und Reparatur. Stillstandszeiten und die Notwendigkeit einer vollständigen Entleerung eines Beckens zum Zwecke einer Störungsbeseitigung werden weitestgehend vermieden.

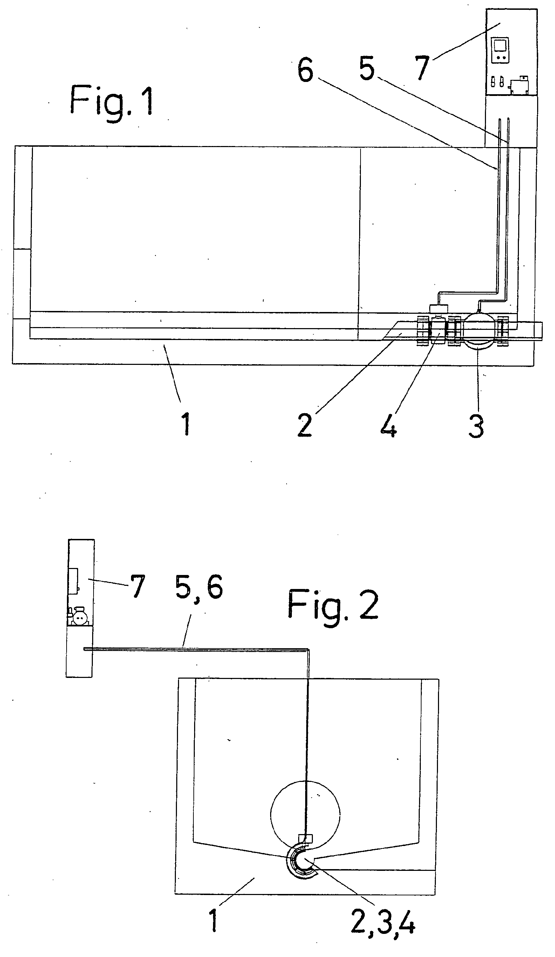

Anhand eines Ausführungsbeispiels wird die Neuerung näher erläutert. Es zeigen
- Fig. 1 und 2: ein Regenüberlaufbeckens mit einer neuerungsgemäßen Einrichtung in zwei Ansichten einer schematisierten Darstellung,
- Fig. 3: als Einzelheit die Drosseleinrichtung der Fig. 1 und 2.

In dem Regenüberlaufbecken 1 wird Regenwasser bis zu einer vorgegebenen Höhe gespeichert. Über einen Ablaufkanal 2 wird das gespeicherte Regenwasser nach einer gewissen Verweildauer wieder aus dem Regenüberlaufbecken 1 abgeführt. Die Menge des in einer bestimmten Zeiteinheit abgeführten Regenwassers wird bestimmt durch eine Drosselvorrichtung, welche durch ein pneumatisch betätigtes Quetschventil 3 gebildet wird. Dem Quetschventil 3 ist ein magnetischinduktiver Durchflußmesser (MID) 4 vorgeschaltet, mit dem die jeweils den Ablaufkanal 2 passierende Flüssigkeitsmenge festgestellt wird.

Das Quetschventil 3 und der MID 4 sind über Leitungen 5 und 6 mit einer Regeleinrichtung 7 verbunden, die in Abhängigkeit eines vorgegebenen Wertes bzw. Verlaufs und der jeweils durch den MID 4 gemessenen Durchflußmenge die Öffnung des Quetschventils 3 einstellt.

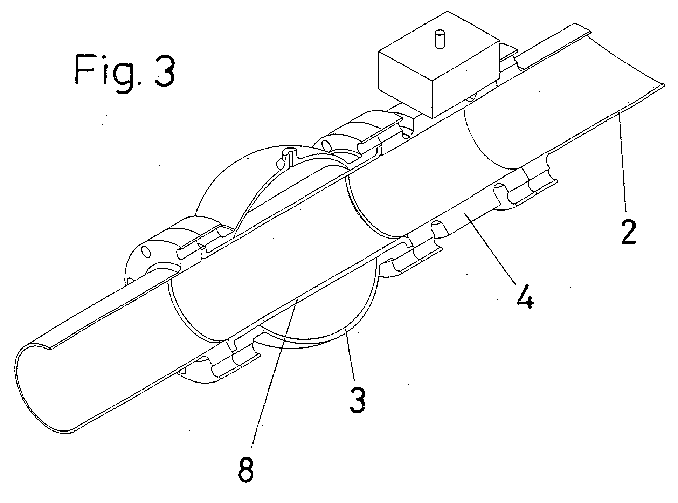

In der Fig. 3 sind der Ablaufkanal 2, das Quetschventil 3 und der MID 4 in einer vergrößerten Ansicht im Schnitt dargestellt.

Die Bemessung der Durchflußmenge wird mit Hilfe einer Schlauchmembran 8 vorgenommen, die in dem Gehäuse des Quetschventils 3 angeordnet ist. Die Einstellung der Schlauchmembran 8 und damit der Öffnung des Quetschventils 3 und der Durchflußmenge erfolgt durch den Druck eines in das Gehäuse des Quetschventils 3 eingeführten Gases. Die Schlauchmembran 8 vermag somit flexibel auf die den Ablaufkanal 2 passierende Flüssigkeitsmenge einzuwirken. In der Flüssigkeit enthaltene Feststoffe, die sich zunächst in der durch die Schlauchmembran 8 gebildeten Einengung festsetzen, werden dadurch beseitigt, daß sich die Schlauchmembran 8 automatisch öffnet und so die Feststoffe freigibt.

## Patentansprüche

1. Einrichtung zur Regelung der einem Flüssigkeitsbehälter (1) über einen Abfluß entströmenden Flüssigkeitsmenge, insbesondere zur Drosselung der Abflußmenge aus einem Abwasser-, Regenüberlauf- oder Regenrückhaltebecken, mit einer in einem Ablaufkanal (2) angeordneten, im Querschnitt veränderbaren Drosselvorrichtung, **gekennzeichnet durch** eine elastisch einstellbare, mit einem flexiblen Drosselglied (8) ausgestattete Drosselvorrichtung (3).

2. Einrichtung nach Anspruch 1, **dadurch gekennzeichnet, daß** die Drosselvorrichtung (3) von einem Quetschventil gebildet wird.

3. Einrichtung nach Anspruch 2, **gekennzeichnet durch** ein pneumatisch betätigtes Quetschventil (3).

4. Einrichtung nach Anspruch 2, **gekennzeichnet durch** ein hydraulisch betätigtes Quetschventil (3).

5. Einrichtung nach Anspruch 1 oder einem der folgenden Ansprüche, **gekennzeichnet durch** ein der Drosselvorrichtung (3) zugeordnetes Durchflußmeßgerät (4) zur Feststellung der über den Ablaufkanal (2) fließenden Abflußmenge und eine das Signal des Durchflußmeßgerätes (4) verarbeitende Regeleinrichtung (7) zur Einstellung des Öffnungsgrades der Drosselvorrichtung (3).

6. Einrichtung nach Anspruch 5, **dadurch gekennzeichnet, daß** das Durchflußmeßgerät durch einen magnetisch-induktiven Durchflußmesser (4) gebildet wird.
